(19) Europäisches Patentamt
European Patent Office
Office européen des brevets

(11) **EP 3 537 321 A1**

(12) **EUROPEAN PATENT APPLICATION**

(43) Date of publication:
**11.09.2019 Bulletin 2019/37**

(51) Int Cl.:
*G06F 21/31* (2013.01)    *G06F 21/32* (2013.01)
*G06K 9/00* (2006.01)    *G10L 17/00* (2013.01)
*G06K 9/62* (2006.01)    *G10L 17/10* (2013.01)

(21) Application number: **18161116.1**

(22) Date of filing: **09.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **VoicePIN.com Sp. z o.o.**
**30-535 Kraków (PL)**

(72) Inventors:
• **KALICKI, Daniel**
  **30-535 Kraków (PL)**

• **DANKIEWICZ, Michal**
  **30-535 Kraków (PL)**
• **CIURKA, Pawel**
  **30-535 Kraków (PL)**
• **GALKA, Jakub**
  **30-535 Kraków (PL)**

(74) Representative: **Markieta, Jaroslaw Franciszek**
**Kancelaria Rzeczników Patentowych**
**J. Markieta, M. Zielinska-Lazarowicz Sp. p.**
**Bukowinska 2 lok 160**
**02-703 Warszawa (PL)**

(54) **SYSTEM AND METHOD OF VOICE-SENSORY USER VERIFICATION**

(57)    The subject of the application is a voice-sensory user verification method comprising steps in which the sound signal (GS) is registered (1), the speech signal (G) is extracted (2) from the sound signal (GS) signals (P) describing movement and position of the device (M) recording the audio signal (1) are recorded (3), **characterised in that** the speech signals (G) and signals (P) describing the movement and location of the device (M) serve as the basis for constructing (4) sequences of voice feature vectors (wg) and sensory feature vectors (ws), and then a voice-sensory model characterising the user of the device (M) is constructed (5, 38), whereby the voice-sensory model is built by combining, synchronising and scaling voice feature vectors (wg) and sensory feature vectors (ws) into segments corresponding to the same moments in time, and then parameters of the multidimensional probability density distribution of the combined voice-sensory vectors are estimated iteratively for subsequent segments, an authorisation signal is generated (39) based on the comparison of the similarity of the obtained voice-sensory model to the stored voice-sensory model of the user, with the adopted threshold.

**EP 3 537 321 A1**

**Description**

The subject of the invention is a system for voice-sensory user verification.

User identity verification with voice-sensory techniques belongs to the field of biometrics and is used in access control systems for data and facilities.

Biometric systems used to verify the user's identity are known in the prior art.

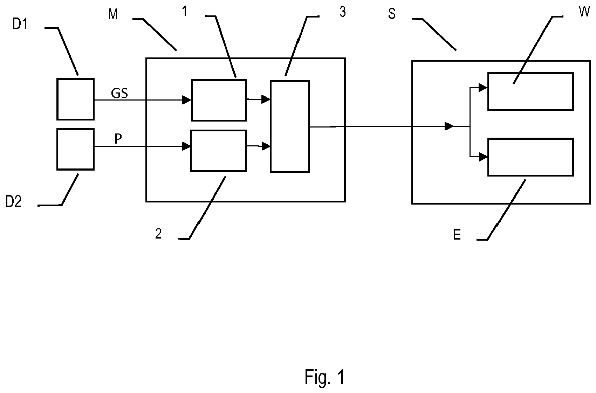

Document WO002012067948 discloses a biometric verification system in which a sequence of motions was used as a password to access a mobile computing device. The password may contain a specific set of movements performed by the user using a mobile computing device. Typically, this refers to the user holding the mobile computing device in one or both hands and moving the entire device in a physical gesture in a planned and purposeful manner. The three-dimensional motion of the mobile computing device can be detected by an accelerometer in the mobile computing device. The registered movement can be transformed into digital information on directional movement. In the embodiment, this directional movement information may include at least a part of the password. For example, as shown in Fig. 1, the user holds the mobile computing device 100 and at the right time moves the device along vector 101. Vector 101 may be any vector in a three-dimensional space. In one embodiment, after returning the device to the approximate initial position in the three-dimensional space, the user moves the device along vector 102.

Document WO2015127253 discloses a so-called trust broker system, which can use various input data from various biometric sensors, context sensors and data input by the user (e.g. names, identifiers, passwords, PIN codes, etc.). In order to manage the bidirectional interaction between the mobile device and the authenticating entity, it can use the basic authentication interface between the mobile device and the authenticating entity with which the user wishes to be authenticated. The trust broker module can extract and provide credentials with a basic mechanism for their delivery. For example, the trust broker module may generate a trust coefficient and / or a composite trust score that may be provided to the authenticating entity. Trust coefficients, trust results, authentication results from a mobile device using an authentication system and / or other sensor data, information from sensors or input data may be included in one or more trust vector fields that may be provided to the authenticating entity. In addition, the trust broker module may control or otherwise interact with one or more sensors associated with the mobile device.

Document US2016065572A1 discloses a method for supplementing identity verification with an additional authorisation channel. In a known system, if user authentication is required, the terminal controls the biometric identification programme, application or graphical user interface (GUI). The biometric identification programme, application or graphical user interface (GUI) can be controlled together when a programme requiring authorisation is started. If a biometric identification programme is implemented, the application or graphical user interface (GUI), terminal collects primary credentials. The primary credentials may correspond to information requiring user interaction. Information that requires user interaction may include, for example, information regarding the user's fingerprints, iris, face contours, blood, saliva, information that can be collected from the user's body parts, such as a nail, the user's signature, information about the password that the user enters in the terminal, or information that is passed orally by the user using the terminal by calling the call centre operator. Separately from collecting primary authentication information, the terminal collects secondary authentication information. The collection of secondary authentication information may be performed via a separate terminal, other than that used to collect primary authentication information. In the event that secondary authentication information is collected via a separate terminal, a separate terminal may be requested by the terminal that collects primary authentication information to collect secondary authentication information. Upon receipt of a collection request or after a specified time from receipt of a collection request, a separate terminal may receive the secondary authentication information and transfer the collected secondary authentication information to the terminal collecting the first authentication information. Secondary authentication information may correspond to information that does not require user interaction.

The gist of the invention is a voice-sensory user verification method comprasing steps in which an sound signal is registered, a speech signal is extracted from the sound signal and signals describing the movement and position of the deviceregistering the audio signal are recorded. The method according to the invention is characterised in that sequences of voice feature vectors and sensory feature vectors are constructed on the basis of speech signals and signals describing the device's movement and position, and then a voice-sensory model is constructed that characterises the user of the device. The voice-sensory model is built by combining, synchronising and scaling voice feature vectors and sensory feature vectors into segments corresponding to the same moments in time, and then modelling such processed data. Then, an authorisation signal is generated based on a comparison of the similarity of the obtained voice-sensory model against the user's recorded voice-sensory model, using the adopted threshold.

Furthermore, the method according to the invention is characterised in that the voice features vector contains extracted voice features for a given time period.

Furthermore, the method according to the invention is characterised in that the voice features are features defined by using PLP, MFCC or LPD techniques.

Furthermore, the method according to the invention is characterised in that the sensory features vector contains data describing the position and movement of the device for a given time period.

Furthermore, the method according to the invention is characterised in that the sensory features vector contains data describing the position and movement of the device for a given time period, in particular data processing includes reducing the device's impact on the measurement results by using complementary filters, Kalman filters, moving average, eliminating the impact of gravitational acceleration.

Furthermore, the method according to the invention is characterised in that the sensory features vector contains sensory features determined on the basis of signal samples describing the position and movement of the device, incremental values specifying the degree of change between consecutive samples, and further incremental values indicating the degree of change between subsequent incremental values for a given time period.

Furthermore, the method according to the invention is characterised in that the sensory features are, in particular, polynomial coefficients adapted to the sensory signal, the spectrum of the sensory signal, the histogram of the sensory signal, the correlogram of the sensory signal, for a given time period.

Furthermore, the method according to the invention is characterised in that the sensory features vector is subjected to a dimensionality reduction and a reduction of its degree of correlation.

Furthermore, the method according to the invention is characterised in that the multidimensionality reduction and reduction of the degree of correlation are performed by means of PCA (Principal Component Analysis) or whitening.

In addition, the method according to the invention is characterised in that the grouping of sensory feature vectors into segments is performed for a set segment length or a particular rate indicating the beginning of another segment.

In addition, the method according to the invention is characterised in that the sensory-motion pattern is created by estimating the multidimensional probability density (GMM) or projecting the GMM supervector into a space of complete voice-movement variation (i-vector) or a temporal statistical model estimation technique (HMM-GMM).

In addition, the essence is a user registration method in the voice-sensory user verification system comprising steps in which an sound signal is recorded, a speech signal is extracted from the sound signal, signals describing the movement and position of the sound recording device are registered. The method according to the invention is characterised in that sequences of voice feature vectors and sensory feature vectors are constructed on the basis of speech signals and signals describing the device's movement and position, and then a voice-sensory model is constructed that characterises the user of the device. The voice-sensory model is built by combining, synchronising and scaling voice feature vectors and sensory feature vectors into segments corresponding to the same moments in time, and then modelling such processed data. Then the user's voice-sensory model is saved in the database, preferably together with the user's identity identifier.

The method according to the invention is characterised in that the sensory-motion pattern is created by estimating the multidimensional probability density (GMM) or projecting the GMM supervector into a space of complete voice-movement variation (i-vector) or a temporal statistical model estimation technique (HMM-GMM).

Furthermore, the essence of the invention is a voice-sensory user verification system comprising a mobile device capable of registering a sound signal, to extracting a speech signal from an sound signal and recording signals describing the movement and position of the device. The system according to the invention is characterised in that the system also includes a server connected for communication purposes with the mobile device, with this server being adapted to building a sequence of voice feature vectors and sensory feature vectors based on speech signals and signals describing the movement and location of the device. The server is adapted to building a voice-sensory model that characterises the device's user. The server is adapted to construct a voice-sensory model by combining, synchronising and scaling the voice feature vectors and sensory feature vectors into segments corresponding to the same moments in time, in addition the server is adapted to create a model for data obtained in this manner. The server is adapted to generate an authorisation signal based on a comparison of the similarity of the obtained voice-sensory model to the stored user's voice-sensory model, with the adopted threshold.

Furthermore, the system according to the invention is characterised in that the server is adapted to storing the user's voice-sensory model in a database together with the user's identity identifier.

An advantage of the invention is the introduction of bi-modal verification based simultaneously on voice features, or in a broader sense an utterance, as well as on sensory features associated with the user's motor functions, with such a combination increasing the level of security associated with an attempt to verify the user's identity. In addition, the use of synchronised data, not only occurring independently of each other, but also as a pair of synchronous events, also contributes to an increased level of security, which is an undeniable advantage of the method and system defined in the invention.

Another advantage of the invention is the introduction of an unexpected difficulty when attempting to break the security measures introduced according to the invention, the lack of awareness of the registration of the movement layer means that the verification in the movement layer is unnoticeable.

The user identity verification method introduced by the invention is resistant to an attack using an illegitimately obtained authorisation utterance because movement data cannot be overheard from outside the device.

Another advantage is the easy implementation of the system on many different types of hardware platforms, due to the use of existing combinations of sensors found in mobile devices.

The subject of the invention is presented in more detail in a preferred embodiment in figures, in which:

Fig. 1    presents a diagram of the voice-sensory user verification system according to the invention;

Fig. 2    presents a block diagram of the user registration method in voice-sensory user verification system and processing a single user utterance;

Fig. 3    presents a block diagram of the voice and sensory signal processing method in the user identity verification process.

Fig. 1 presents a diagram of a system for verifying the identity of a user of a mobile device M by means of voice and device movement. On the mobile device M, equipped with a microphone and at least one motion sensor, software is installed to record 1 sound data and record 2 data on the position and movement of the device M, and transmit it to the biometric verification server. The biometric verification server S is responsible for creating voice and movement patterns, i.e. procedure E of user registration in the system and verification procedure V, which consists in comparing the biometric pattern generated from the provided voice and movement data with the user's pattern stored in the system.

Regarding the comparison method, it depends on the adopted modelling method. Preferably, it is possible to use one of three modelling techniques. The first modelling technique is GMM (Gaussian Mixture Model) -the comparison method consists in determining the value of the probability density function included in the model for each voice-motion feature vector. The final result of the comparison is the average value for all voice-motion feature vectors. In the case where the model is an HMM-GMM model (Hidden Markov Model - Gaussian Mixture Model) - the comparison is based on the determination of the value of the probability density function included in the GMM models of individual HMM model states. If the model is an i-vector-the model is a vector that is a projection of the GMM-UBM supervector (Gaussian Mixture Model - Universal Background Model) onto a total variability space. During the comparison, a vector is also created that is a projection onto the same space. The result of the comparison is the measurement of the angle or Euclidean distance between the vector that is the model and the vector created from the verification data.

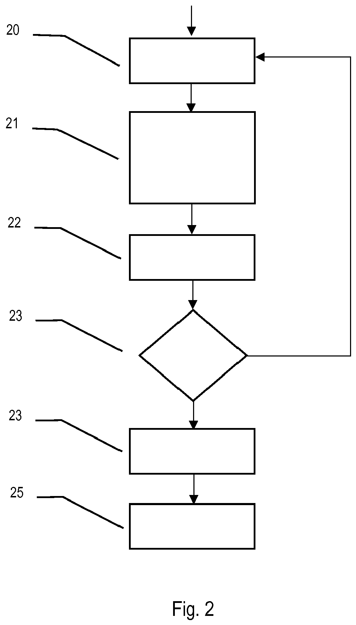

Fig. 2 presents a block diagram of a user verification method in the part regarding the registration and processing of sound signal GS and sensory signals P to build a user's voice-sensory pattern. The purpose of the procedure shown in Fig. 2 is to enrol the user and save the user's voice-movement pattern in the database. Thanks to this, a given user will be able to verify their identity in the future based on voice-movement data.

According to the embodiment of the invention in Fig. 2, the user is first asked to register a voice sample GS. Then, the 20 registration process of the position and motion of device M is started. The recorded values can come from the sensors of device M, such as accelerometers or gyroscopes. After registering the first signs of movement, device M begins recording 21 sound. This may be the result of the execution of a specific gesture, shaking or pressing a button that device M is equipped with. Upon completion of the utterance, the sound recording 22 stops, as a result of another gesture of shaking or pressing a button. Then, when the move signalling the end of voice verification is registered, the registration of movement signals P stops.

After the end of each registration of voice signals GS and sensory signals P, a check is performed whether the quantity and quality of voice and movement data is sufficient to create a useful voice-movement pattern. A pattern may be a temporal statistical pattern based on HMM or another type of modelling, created according to ML, MAP, c-entropy, BIC and other mechanisms. If the condition is not met, the process of registering voice signals GS and movement signals P is repeated. If the condition is met, the pattern or patterns are determined and stored in the database.

The database is organised in such a way that one user ID is assigned to one pattern.

The method of verifying the user's identity using the voice-sensory (motion) features is based on the observation that certain features of the user's movement are unique to them. The gesture of triggering registration by shaking may, for a given user, be distinguished, for example, by the number of shakes, their direction and strength. The movement of the device just before the utterance (for example, bringing the device closer to the mouth), when speaking (related to the syllabic nature of speech) and just after (for example, moving the device away from the mouth) also carries information that helps to recognise the user's identity. All these phenomena can be measured using motion sensors (accelerometer, gyroscope), with which modern mobile devices are equipped.

An additional advantage that increases the effectiveness of the voice-sensory user verification system is that the user is not aware that their movement is being registered during the recording session. Hidden protection in the form of device motion analysis is an additional factor that increases security. A potential unauthorised user is also not aware of signal registration and analysis.

Registration of voice-motion data in order to perform identity verification V is the same as in the case of the user enrolment procedure in the system according to the invention. Once biometric data is registered, it is processed and compared to the user's voice-sensory pattern read from the database. If the result of the comparison gives a correlation level exceeding the positive verification threshold, then the decision is made to generate a positive user verification signal. Otherwise, a negative verification signal is generated.

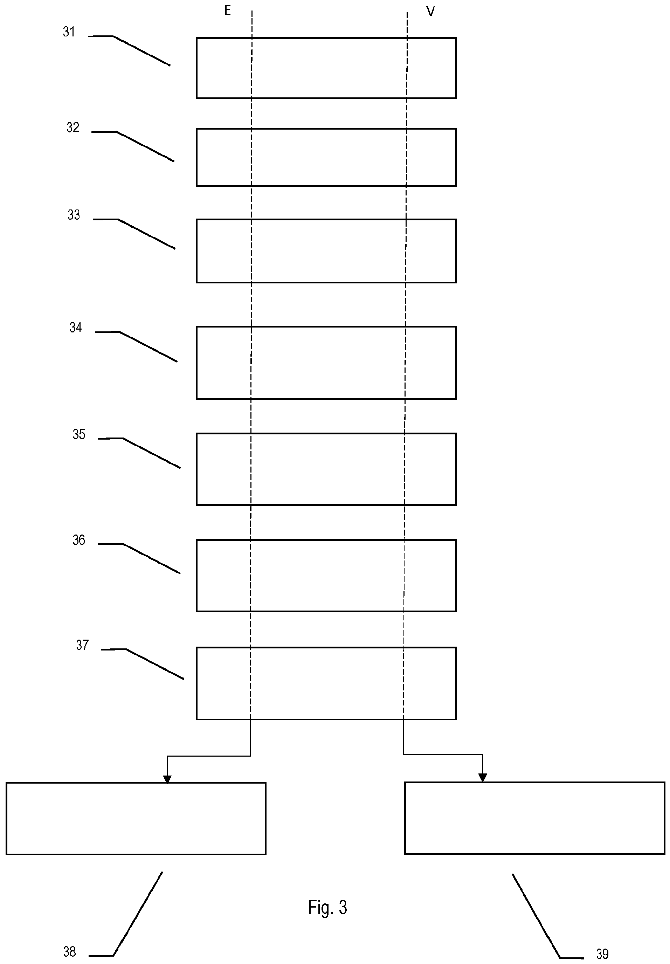

The method of processing movement data signals P according to the invention is shown in Fig. 3. In this method, it is possible to distinguish a series of steps that are performed both in the user enrolment path E and in the user identity verification path V.

In the first step, signals representing movement data P, signals originating from sensors (e.g. gyroscope, accelerometer, magnetometer) are registered 31, then the data in digital form is recorded in the form of identified physical values (e.g. for the gyroscope it is the angular velocity in rad/s, for the accelerometer m/s$^2$ or G).

The measurement of physical values describing the position and movement of the device by means of sensors is performed with a specified frequency (>= 20 Hz). This means that for every second of the signal's duration at least 20 measurement vectors are registered from at least one type of motion sensor. Where one measurement vector consists of, for example, three measurement results from the accelerometer and three measurement results from the gyroscope.

Raw measurement data requires pre-processing 32, which is intended to reduce the influence of the measuring device on the measurement result, for example the lack of proper calibration or measurement inaccuracy is eliminated. The techniques used for such processing can be, for example: determining the orientation of the mobile device by means of simultaneous gyroscope and accelerometer measurements using complementary filters or Kalman filters, using the moving average, the effect of gravitational acceleration being removed from accelerometer measurements, etc.

Since motion recording is a non-stationary process, changes between subsequent measurements are also significant, apart from the values of individual measurements. That is why incremental measures are determined 33. This can be, for example, for a particular sensory feature vector, the difference between a neighbouring vector on the left side of the time axis with a neighbouring vector to the right on the time axis from a given vector. Such features (called delta attributes) can be re-differentiated by creating features referred to in general as acceleration. The delta attributes and acceleration are attached to sensory feature vectors extending their space.

The next step is segmenting 34 of sensory feature vectors **ws**. In this step, consecutive sensory vectors are grouped. The variable in this process is the segment length, and the segment rate with which subsequent segments begin. Within individual segments, the extraction of features 35 is performed. The extracted features are preferably coefficients of the polynomial matched to the sequence, the signal spectrum, the signal histogram, the correlogram, etc.

In the next step, the dimensionality and the degree of correlation of the processed sensory features are reduced 36, with techniques such as PCA (Principal Component Analysis), whitening, etc. possible.

The described steps result in the obtaining of a sequence of sensory feature vectors **ws**, where each vector describes the position and movement of the device over a period of time resulting from the frequency of sensory measurements (for example for 20 Hz it will be an interval of 1/20 sec, or 50 ms).

Having simultaneously recorded voice data containing a biometric password, the extraction of voice features is used in voice data, the features may be, for example, PLP, MFCC, LPD or other features. This extraction results in a sequence of vectors of voice features being obtained, where each of the vectors, like in the case of sensory features, describes a sound signal over a certain time interval, which is in the range of 10-50 ms.

The voice and sensory features are then combined 37 into one sequence of vectors, so that one voice-motion vector represents one time interval. The creation of one voice-motion vector is a concatenation of separate feature vectors. The process of attaching sensory feature vectors to voice feature vectors requires sequence synchronisation and scaling. The purpose of these operations is to generate a common time domain for both sequences.

In the user enrolment process E in the system, the next stage is used to created 38 (train) a statistical model, which may additionally be a temporal model, i.e. one taking into account the temporal dependence of the occurring phenomena.

As mentioned above, the temporal model may also be a statistical model in nature. The statistical model can be described as a probability density function. The domain of this function in the case of the described solution is a space the size of a single voice-motion feature vector. The statistical model determines the probability that a single feature vector comes from the probability distribution of this statistical model. Therefore, it is possible to determine function D (1) as a function of the feature vector sequence and the statistical model, where X is a sequence of feature vectors, A is the statistical model, $x_t$ is a single element of the feature vector sequence, S is the number of feature vectors in the sequence

$$D(X, \lambda) = \frac{\sum_{x_t \in X} LL(x_t|\lambda)}{S} \tag{1}$$

Then, for each segment s E {1 .. N}, where N is the number of segments, $X_s$ is the vector sequence assigned to segment s, one can determine the measure (2), which can be interpreted as the degree of similarity of feature vectors to the own segment against the similarity of these vectors to other segments. The final measure of similarity is the

arithmetic mean of $d_s$., $s \in \{1,.. N\}$.

$$\mu_S = \frac{\sum_{i\in\{1,...N\}\setminus\{S\}} D(X_S,\lambda_i)}{N-1} \tag{2.1}$$

$$\sigma_S = \frac{\sum_{i\in\{1,...N\},\setminus\{S\}}(D(X_S,\lambda_i)-\frac{\sum_{i\in\{1,...N\},\setminus\{S\}} D(X_S,\lambda_i)}{N-1})^2}{N-1} \tag{2.2}$$

$$d_S = \frac{D(X_S,\lambda_S)-\mu_S}{\sigma_S} \tag{2.3}$$

It is possible to use other models as a voice-motion feature model, for example estimating the multidimensional probability density (GMM) or projecting the GMM supervector into a space of complete voice-movement variation (i-vector) or a temporal statistical model estimation technique (HMM-GMM), or generated using the GMM/UBM technique.

Thanks to the fact that single sequence vectors contain both voice and motion features occurring simultaneously, the model will describe such phenomena, increasing the ability to distinguish between different speakers.

In the user verification process V, the same steps are taken as during enrolment E except for the last step 38, in which the statistical model is created. In the last step in the verification process V, processed voice-motion features are compared 39 to the saved model constituting the statistical model. If the comparison result is higher than the assumed trust threshold, the user's identity is confirmed and an identity confirmation signal is sent, otherwise a negative verification signal is generated.

**Claims**

1. A voice-sensory user verification method comprising steps in which

   a sound signal (GS) is registered (1),
   a speech signal (G) is extracted (2) from the sound signal (GS),
   signals (P) that describe the movement and position of the device (M) registering the audio signal (1) are recorded (3),

   **characterised in that**

   the user's voice-sensory model is read from a database,
   sequences of voice feature vectors (wg) and sensory feature vectors (ws) are constructed (4) on the basis of speech signals (G) and signals (P) describing the movement and position of the device (M), then
   a voice-sensory model is constructed (5, 38) that characterises the user of the device (M), whereby
   the voice-sensory model is built by combining, synchronising and scaling voice feature vectors (wg) and sensory feature vectors (ws) into segments corresponding to the same moments in time, and then modelling such processed data
   an authorisation signal based on a comparison of the similarity of the obtained voice-sensory model to the stored user's voice-sensory model is generated (39), with the adopted threshold.

2. The method according to claim 1 **characterised in that** the voice features vector contains extracted voice features for a given time period.

3. The method according to claim 2 **characterised in that** the voice features are features defined by using PLP, MFCC or LPD techniques.

4. The method according to claims from 1 to 3 **characterised in that** the sensory features vector (ws) contains data describing the position and movement of the device (M) for a given time period.

5. The method, according to claim 4 **characterised in that** the sensory features vector (ws) contains data describing the position and movement of the device (M) for a given time period, in particular data processing includes reducing the device's impact on the measurement results by using complementary filters, Kalman filters, moving average, eliminating the impact of gravitational acceleration.

6. The method according to claim 4 or 5 **characterised in that** the sensory features vector (ws) contains sensory features determined on the basis of signal samples (P) describing the position and movement of the device (M), incremental values specifying the degree of change between consecutive samples, and further incremental values indicating the degree of change between subsequent incremental values for a given time period.

7. The method according to claims from 4 to 6 **characterised in that** the sensory features (ws) are, in particular, polynomial coefficients adapted to the sensory signal (P), the spectrum of the sensory signal (P), the histogram of the sensory signal (P), the correlogram of the sensory signal (P), for a given time period.

8. The method according to claims from 1 to 7 **characterised in that** the sensory features vector (ws) is subjected to a dimensionality reduction and a reduction of its degree of correlation.

9. The method according to claim 8 **characterised in that** the multidimensionality reduction and reduction of the degree of correlation are performed by means of PCA (Principal Component Analysis) or whitening.

10. The method according to claims from 1 to 9 **characterised in that** the grouping of sensory feature vectors into segments is performed for a set segment length or a particular rate indicating the beginning of another segment.

11. The method according to claims 1 to 10 **characterised in that** the sensory-motion pattern is created by estimating the multidimensional probability density (GMM) or projecting the GMM supervector into a space of complete voice-movement variation (i-vector) or a temporal statistical model estimation technique (HMM-GMM).

12. A user registration method in voice-sensory user verification system containing steps in which

a sound signal (GS) is registered (1)
a speech signal (G) is extracted (2) from the sound signal (GS),
signals (P) that describe the movement and position of the device (M) registering the audio signal (1) are recorded (3),

**characterised in that**

sequences of voice feature vectors (wg) and sensory feature vectors (ws) are constructed (4) on the basis of speech signals (G) and signals (P) describing the movement and position of the device (M), then
a voice-sensory model is constructed (5, 38) that characterises the user of the device (M), whereby
the voice-sensory model is built by combining, synchronising and scaling voice feature vectors (wg) and sensory feature vectors (ws) into segments corresponding to the same moments in time, and then modelling such processed data is saved in the database as the user's voice-sensory model.

13. The method according to claim 12 **characterised in that** the sensory-motion pattern is created by estimating the multidimensional probability density (GMM) or projecting the GMM supervector into a space of complete voice-movement variation (i-vector) or a temporal statistical model estimation technique (HMM-GMM).

14. A voice-sensory user verification system including a

mobile device (M) capable to registering (1) a sound signal (GS),
extracting (2) a speech signal (G) from the sound signal (GS) and recording (3) signals (P) describing the movement and position of the device (M)

**characterised in that it also includes**

server (S) connected for communication purposes with the mobile device (M), with this server being adapted to building a sequence of voice feature vectors (wg) and sensory feature vectors (ws) based on speech signals (G) and signals (P) describing the movement and position of the device (M), and also
the server (S) being adapted to building (5, 38) a voice-sensory model that characterises the device's (M) user, with

the server (S) is adapted to construct a voice-sensory model by combining, synchronising and scaling the voice feature vectors (wg) and sensory feature vectors (ws) into segments corresponding to the same moments in time, also the server (S) is adapted to create a model for data obtained in this manner,

server (S) is adapted to generate (38) an authorisation signal based on a comparison of the similarity of the obtained voice-sensory model to the stored user's voice-sensory model, with the adopted threshold.

**15.** The voice-sensory user verification system according to claim 14 **characterised in that** the server (S) is adapted to storing the user's voice-sensory model in a database together with the user's identity identifier.

Fig. 1

20

21

22

23

23

25

Fig. 2

E          V

31

32

33

34

35

36

37

Fig. 3

38                                    39

Europäisches
Patentamt

European
Patent Office

Office européen
des brevets

# EUROPEAN SEARCH REPORT

**Application Number**

EP 18 16 1116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/124662 A1 (BACA JIM S [US] ET AL) 17 May 2012 (2012-05-17) * paragraphs [0017] - [0020]; figures 2-5 * * paragraphs [0027] - [0030] * ----- | 1-15 | INV. G06F21/31 G06F21/32 G06K9/00 G10L17/00 G06K9/62 G10L17/10 |
| X | ALEKSIC P S ET AL: "Audio-Visual Biometrics", PROCEEDINGS OF THE IEEE, IEEE. NEW YORK, US, vol. 93, no. 11, 1 November 2006 (2006-11-01), pages 2025-2044, XP011183727, ISSN: 0018-9219 * sections I, III,V, VI; figures 1-3,6-7; table 2 * ----- | 1-15 | |
| X | US 2013/238535 A1 (LEPPANEN JUSSI [FI] ET AL) 12 September 2013 (2013-09-12) * paragraphs [0087] - [0092] * * paragraphs [,122] - [0127] * ----- | 1-15 | |
| X | US 6 219 639 B1 (BAKIS RAIMO [US] ET AL) 17 April 2001 (2001-04-17) * column 2, line 50 - column 3, line 63 * * column 10, lines 51-57 * ----- | 1-15 | **TECHNICAL FIELDS SEARCHED (IPC)** G06F G06K G10L |

The present search report has been drawn up for all claims

| Place of search | Date of completion of the search | Examiner |
|---|---|---|
| Munich | 14 June 2018 | Rey, Salvador |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 16 1116

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2018

| Patent document cited in search report | | | Publication date | Patent family member(s) | | | Publication date |
|---|---|---|---|---|---|---|---|
| US 2012124662 | A1 | | 17-05-2012 | AU | 2011329216 | A1 | 11-07-2013 |
| | | | | CN | 103210394 | A | 17-07-2013 |
| | | | | EP | 2641209 | A1 | 25-09-2013 |
| | | | | JP | 5795381 | B2 | 14-10-2015 |
| | | | | JP | 2014504393 | A | 20-02-2014 |
| | | | | KR | 20130085040 | A | 26-07-2013 |
| | | | | US | 2012124662 | A1 | 17-05-2012 |
| | | | | WO | 2012067948 | A1 | 24-05-2012 |
| US 2013238535 | A1 | | 12-09-2013 | EP | 2588994 | A1 | 08-05-2013 |
| | | | | US | 2013238535 | A1 | 12-09-2013 |
| | | | | WO | 2012001215 | A1 | 05-01-2012 |
| US 6219639 | B1 | | 17-04-2001 | NONE | | | |

EPO FORM P0459

For more details about this annex : see Official Journal of the European Patent Office, No. 12/82

**EP 3 537 321 A1**

### Patent documents cited in the description

- WO 002012067948 A
- WO 2015127253 A
- US 2016065572 A1